# NEW EUROPEAN PATENT SPECIFICATION

(11) **EP 0 159 268 B2**
(45) Date of publication and mention of the opposition decision: **28.08.1996**
(45) Mention of the grant of the patent: 15.03.1989
(21) Application number: 85400719.2
(22) Date of filing: 11.04.1985
(51) Int. Cl.: C08L 27/12, C09D 127/12

(54) **Fluoropolymer coating and casting compositions and films derived thereform**
Giess- und Beschichtungsmassen auf Fluorpolymerbasis und daraus hergestellte Überzüge
Compositions de revêtement et de coulage à base de fluoropolymères et revêtements produits à partir de ces compositions

(30) Priority: 13.04.1984 US 599764
(43) Date of publication of application: 23.10.1985
(60) Divisional application: 88117008.8
(73) Proprietor: CHEMFAB CORPORATION, Merrimack New Hampshire 03054 (US)
(72) Inventor: Effenberger, John A., Bedford New Hampshire 03102 (US); Keese, Frank M., Cambridge, NY 12816 (US)
(74) Representative: Portal, Gérard

(56) References cited:
- EP-A- 0 058 393
- WO-A-80/00929
- GB-A- 997 096
- GB-A- 1 126 012
- US-A- 3 051 683
- US-A- 3 484 503
- US-A- 3 925 292
- US-A- 4 128 693
- J. Polymer Science A-1, vol. 8, 1970, pp. 1091-98

## Description

### Background of the Invention

This invention relates to fluoropolymer coating and casting compositions and films which may be derived from such compositions.

It is well known that perfluoroplastic coatings resulting from the simple deposition of an aqueous dispersion on a surface will tend to develop cracks while undergoing consolidation during drying or fusing operations if their thickness exceeds a certain maximum value, commonly referred to as the "critical cracking thickness". In the case of polytetrafluoroethylene, this thickness is generally expected to be on the order of 0.025 mm, for coatings applied to smooth horizontal surfaces under ideal conditions. For fluorinated ethylenepropylene (FEP) or perfluoroalkoxy modified polytetrafluoroethylene (PFA) the value is less than 0.0125 mm. When such dispersions are applied to vertical surfaces, as is often desirable or necessary in the continuous coating of substrates in web form and in the dip or spray coating of objects, the effective critical cracking thickness is substantially reduced, often to less than half of the ideal values. In the case of relatively uneven or textured planar substrates, e.g. woven glass, it is difficult in practice to apply coatings of uniform thickness, since the coating fluids, under the influence of gravitational or capillary forces, tend to flow as they seek a position of minimum potential energy. This leads inevitably to a variation in the depth of such fluids and a resultant variation in the thickness of coalesced solids derived therefrom. Cracks can then develop when the thickness of deposited solids exceeds the critical value. In the case of three dimensional objects, surface tension and rapidly rising viscosity associated with coalescence often results in beading of the coating fluids along edges or corners of the object, resulting in thick resin deposits susceptible to cracking.

US-A-3,484,503 Magner is disclosing in example 3 the preparation of intermediate fluid compositions comprising an aqueous dispersion of a copolymer of TFE and HFP, or PTFE with a copolymer of TFE with PMVE which is immediately frozen to coagulate (column 2, lines 61-64 and column 4, lines 26-27).

Journal of Polymers Science, part I, volume 8, 1991-1998 (1970) discloses the performance of fluorocarbon elastomers in general.

US-A-3,051,683 Mallouk is essentially similar to Magner by disclosing in examples 1 and 2 an aqueous dispersion of polytetrafluoroethylene admixed with an aqueous dispersion of hexafluoropropylene-tetrafluoroethylene copolymer which are coagulated, dried, admixed with an organic solvent as a lubricant for Ram-extrusion (column 3, lines 11 to 27 and 60 to 75).

In addition, it is disclosed on column 4, line 70 to colomn 5, line 3, that the blends of polytetrafluoroethylene and copolymers of tetrafluoroethylene and hexafluoropropylene are useful in the form of aqueous dispersions as obtained by admixing aqueous dispersion of the components to give rise to improved casting compositions in that thicker films can be cast from the co-dispersion than from either polymer dispersion alone without obtaining cracks in the cast film on sintering.

US-A-3,925,292 Holmes discloses a composition comprising an aqueous solution of a critical combination of a non-melt fabricable polytetrafluoroethylene, a non elastomeric melt fabricable tetrafluoroethylene copolymer and non ionic surfactant for said polytetrafluoroethylen and said copolymer.

Accordingly, the presence of a non elastomeric tetrafluoroethylene copolymer is required.

WO80/00929 Du Pont de Nemours discloses plastic / plastic blends of PTFE and copolymers of TFE with PVE optionally with HFP.

GB-A-126,012 Du pont de Nemours does not relate to the critical combination of a perfluoroelastomer latex with a perfluoroplastic resin.

US-A-4,128,693 Dhami discloses solid blends of PTFE with PFA in naphta as a solubricant for melt extrusion coating (claim 1, column 2, lines 3 to 5 and example 1).

For certain purposes, such as in the coating of textiles, it is often necessary or desirable to apply uniform and continuous films of polytetrafluoroethylene or other perfluoroplastics in thicknesses greater than the critical cracking thickness. A number of techniques for accomplishing this objective are wellknown in the art.

Relatively thick crack-free coatings can be achieved through multiple, consecutive applications of coating fluid, each of which results in solid deposition less than the critical cracking thickness. Each application preferably involves drying and fusing of the solids between subsequent applications of the coating fluid. In the known production of coated textiles as by dip coating, this multiple coat build-up has shortcomings. The technique requires that the textile substrate to which the coating is applied be repeatedly subjected to the high temperatures required to melt perfluoroplastics, i.e. above 343°C in the case of polytetrafluoroethylene. Such repeated heating to such high temperature can result in degradation of the physical properties of the reinforcement and create mechanical stress concentrations in the coating matrix.

In the case of PTFE applied from relatively viscous fluid formulations, the problems associated with critical cracking thickness are dealt with by accepting the presence of cracks in an unfused or semi-fused condition, and subsequently attempting to heal them by calendaring at a temperature sufficient to soften the resin, but insufficient to melt it. The inability to uniformly deliver pressure to the resin thus consolidated due to the presence of hard and relatively stiff textile reinforcements reduces the effectiveness of this approach and some degree of microcracking remains even in the finished, fused products. This method is, moreover, limited to the coating of flexible, planar substrates and is not applicable to the coating of irregular surfaces or objects.

While mineral fillers may be employed to increase the nominal critical cracking thickness, their presence is often undesirable for reasons related to the end-use of products so manufactured.

U.S. Patent No. 2,681,324 to Hochberg describes the addition of large quantities of aqueous dispersions of polymeric materials, such as alkyl acryaltes and blends thereof, butyl methacrylate, styrene, styrene/butadiene copolymers, acrylonitrile, or butadiene/acrylonitrile copolymers, to polytetrafluoroethylene dispersions to form codispersions which can be used to apply relatively thick, crackfree polytetrafluoroethylene coatings. These materials are thermally unstable at temperatures well below those required to fuse polytetrafluoroethylene and are for the most part fugitive in normal processes with attendant shrinkage of the coalescing film. U.S. Patent No. 2,710,266, to Hochberg describes the addition of aqueous solutions of alkali metal silicates, for example sodium silicate, to polytetrafluoroethylene dispersions for the same purpose. While suitable for certain substrates, such compositions are largely unsuitable for the more commonly employed textile substrates, such as glass cloth.

The British Patent GB 997,096 discloses a coating composition containing a mixture of a polytetrafluoroethylene latex and an elastomeric copolymer of vinylidene fluoride and perfluoropropene. This material is di-coated onto fiberglass cloth.

The EP-A 0 058 393 discloses fluorine-containing rubber coating compositions comprising a fluorine-containing rubber, a fluorine-containing resin and an amino silane. The fluorinated rubber is a copolymer of vinylidene fluoride and at least one other fluorinated ethylenically unsaturated monomer. The fluorinated resin may be polytetrafluoroethylene or a copolymer of tetrafluoroethylene and some other monomer.

Accordingly, it is an object of this invention to provide a fluid perfluoropolymer coating composition which can be used to produce, with fewer applications of the fluid, relatively thick, crack-free coatings.

It is also an object of this invention to produce films, supported or unsupported, which are considerably thicker than those which can be readily produced from known formulations, and which may be formed as a planar sheet or a three-dimensional product, such as a glove, bladder, or other shape by dipping or spraying a removal mandrel.

It is a further object of the invention to provide perfluoropolymer coating compositions which are process compatible with known perfluoroplastics in that films formed therefrom can be thermally welded to them as well as to each other and to perfluoroplastics.

It is also an object of this invention to provide fluid perfluoropolymer coating compositions which may be useful for the improvement of fluoropolymer-containing articles by ameliorating undesirable behavior stemming from mudcracking and limited build rate inherent to known compositions and methods.

It is another object of this invention to provide perfluoropolymer coatings, composites or film properties the mechanical behavior of which can be controlled through selective formulation of perfluoroplastics and perfluoroelastomers.

It is yet another object of this invention to provide perfluoropolymer coatings or films with physical, chemical and electrical characteristics different from those obtainable with known fluoropolymers.

It is finally an object of this invention to provide a perfluoropolymer coating composition able to bridge the relatively substantial discontinuities associated with many textile substrates.

### Summary of the Invention

The invention relates to the use of a fluid composition comprising an aqueous fluid blend of 10-90% by weight of perfluoroelastomer latex and 90-10% by weight of an aqueous perfluoroplastic resin dispersion as such, excluding a blend of polytetrafluoroethylene (PTFE) with a copolymer of tetrafluoroethylene (TFE) with hexafluoropropylene (HFP) for the manufacture of crack-free, relatively thick, coatings or films supported or unsupported, notably by dipping, casting or spraying.

According to another embodiment, the invention relates to the use of a fluid composition comprising an aqueous fluid blend of 10-90% by weight of perfluoroelastomer latex comprising a copolymer of tetrafluoroethylene (TFPE) with a perfluoro (alkylvinyl ether) comonomer and 90-10 % by weight of an aqueous perfluoroplastic resin dispersion as such for the manufacture of crack-free relatively thick, coatings or films, supported or unsupported, notably by dipping, casting or spraying.

Perfluoroplastic means polymers of general paraffinic structure which have some or all of the hydrogen replaced by fluorine, including, *inter alia*, polytetrafluoroethylene (PTFE), perfluorinated ethylene propylene (FEP) copolymer, perfluoroalkoxy (PFA) resin.

Perfluoroelastomer means any polymer exhibited elastomeric behavior or having a low flexural modulus, i.e. high compliance, and containing one or more perfluorinated monomers having ethylenic unsaturation. The fluorinated monomer may be a perfluorinated mono-olefin, for example hexafluoropropylene (HFP), tetrafluoroethylene (TFE) or perfluoroalkyl vinyl ethers, e.g. perfluoro (methyl vinyl ether) (PMVE) or (perfluoro propyl vinyl ether) (PPVE). The mono-olefin is preferably a straight or branched chain compound having a terminal ethylenic double bond. The elastomer will normally consist of carbon, oxygen and fluorine atoms.

Preferred perfluoroelastomers include elastomeric copolymers of tetrafluoroethylene with perfluoro alkyl comonomers, such as hexafluoropropylene or perfluoro (alkyl vinyl ether) comonomers represented by 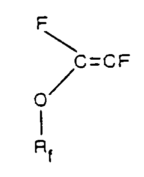 in which R_{f} is a perfluoroalkyl or perfluoro (cyclooxa alkyl) moiety. Particularly preferred are the perfluorovinyl ethers in which R_{f} is selected from the groups 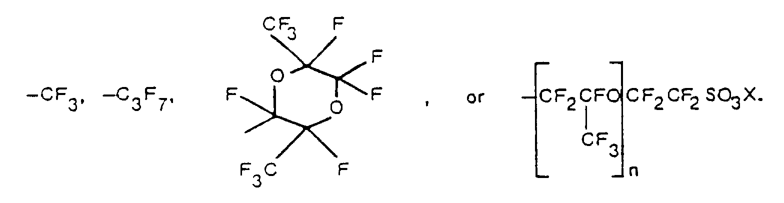 where n = 1-4 and X = H, Na, K or F. KALREZ (registered Trademark), a copolymer of TFE and perfluoromethylvinyl ether (PMVE), or its modifications, is a particularly useful fluoroelastomer.

The perfluoroelastomer polymer, preferably a latex or blend of latexes, should be compatible with (a) the perfluoroplastic dispersion to be modified, (b) the processing conditions to which the composition must be subjected, and (c) the end use for which the material or articles containing it is being manufactured.

The invention also encompasses a film comprising one or more resinous components derived from the fluid coating or casting compositions hereinbefore described. Such a film may be constructed as a sequence of lamellae the composition of which may be varied to induce the desired combination of electrical physical and chemical properties. If desired, a non-resinous component, such as a metallic component, may be interspersed among the resinous lamellae; e.g., a thin metallic deposit to modify permeability, electrical, magnetic, or optical behavior of the film. The utility of such deployment of the film lamellae to affect the mechanical and chemical behavior of composites derived from such films is described in our European application EP 0 125 955.

The invention films may be supported by a member to which the film can be bonded to provide greater strength, dimensional stability or rigidity. For example, a film according to the invention may be supported by any suitable reinforcement material treated where necesary to facilitate bonding of the films-thereto. Examples of suitable reinforcement materials include, *inter alia,* glass, fiberglass, ceramics, graphite (carbon), PBI (polybenzimidazole), PTFE, polyaramides, such as KEVLAR (registered Trademark) and NOMEX (registered Trademark), metal, including metal wire, polyolefins such as TYVEK (registered Trademark), polyesters such as REEMAY (registered Trademark), polyamides, polyimides, thermoplastics such as KYNAR (registered Trademark) and TEFZEL (registered Trademark), polyphenylene sulfide, polyether oxides, polyether sulfones, polyether ketones, novoloid phenolic fibers such as KYNOL (registered Trademark), cotton, asbestos and other natural as well as synthetic textiles. The substrate may comprise a yarn, filament, monofilament or other fibrous material either as such or assembled as a textile, or any woven, non-woven, knitted, matted, felted, etc. material.

Furthermore, the invention compositions are valuable in the manufacture of fluoropolymer coated textiles having a thick crack-free coating matrix, without specific regard for the mechanical or other properties of the film or coating itself. For example, they may be used to reduce the number of operations required to apply a coating of a desired thickness. Such processing may result in composites which more efficiently utilize the inherent physical properties of a reinforcement than otherwise possible.

The following additives may be included in formulating the composition of the fluids and films according to the invention: a surface active agent such as an anionic active agent or non-ionic active agent; a creaming agent such as sodium or ammonium alginate; a viscosity-controlling agent or a thickener such as methyl cellulose or ethyl cellulose; a wetting agent such as a fluorinated alkyl-carboxylic acid, an organic solvent, or sulfonic acid; or a film former.

While representative applications and embodiments of the invention have been described, those skilled in the art will recognize that many variations and modifications of such embodiments may be made without departing from the spirit of the invention as claimed.

## Claims (Claims for the following Contracting State(s): BE, CH, DE, FR, GB, IT, LI, LU, NL, SE)

1. Use of a fluid composition comprising an aqueous fluid blend of 10-90 % by weight of a perfluoroelastomer latex and 90-10 % by weight of an aqueous perfluoroplastic resin dispersion as such, excluding a blend of polytetrafluoroethylene (PTFE) with a copolymer of tetrafluoroethylene (TFE) with hexafluoropropylene (HFP), for the manufacture of crack-free, relatively thick, coatings or films supported or unsupported notably by dipping, casting or spraying.

2. Use of a fluid composition comprising an aqueous fluid blend of 10-90 % by weight of a perfluoroelastomer latex comprising a copolymer of tetrafluoroethylene (TFE) with a perfluoro (alkylvinylether) comonomer and 90-10 % by weight of an aqueous perfluoroplastic resin dispersion as such for the manufacture of crack-free relatively thick, coatings or films, supported or unsupported, notably by dipping, casting or spraying.

3. The use of claim 1 or 2 wherein the perfluoroplastic resin is polytetrafluoroethylene (PTFE) or a fluorinated ethylene propylene (FEP).

4. The use of one of claims 1 to 3 wherein the perfluoroelastomer latex is a copolymer of tetrafluoroethylene (TFE) and perfluoromethylvinyl ether (PMVE).

5. The use according to anyone of claims 1 to 4 containing cross-linking accelerators.

6. The use according to anyone of claims 1 to 5 containing suitable additives.

7. The use according to anyone of claims 1 to 6, for the preparation of a film comprising a sequence of lamellae wherein one or more lamellae is made from said fluid composition comprising a perfluoroplastic resin aqueous dispersion and perfluoroelastomer latex blend.

8. The use according to claim 7, wherein at least one non-resinous component is interspersed with other resineous lamellae.

9. The use according to claim 8, wherein the non-resinous lamellae contains a metallic composition.

## Claims (Claims for the following Contracting State(s): AT)

1. A method of preparation of crack-free, relatively thick, coatings or films, supported or unsupported, comprising blending 10-90 % by weight of a perfluoroelastomer latex in 90-10 % by weight of an aqueous perfluoroplastic resin dispersion, excluding a blend of polytetraperfluoroethylene (PTFE) with a copolymer of tetrafluoroethylene (TFE) with hexafluoropropylene (HFP), to provide an aqueous fluid blend and preparing said crack-free, relatively thick coatings or films by dipping, spraying or casting said aqueous fluid blend.

2. A method of preparation of crack-free, relatively thick, coatings or films, supported or unsupported, comprising blending 10-90 % by weight of a perfluoroelastomer latex comprising a copolymer of tetrafluoroethylene (TFE) with a perfluoro(alkylvinyl ether) comonomer in 90-10 % by weight of an aqueous perfluoroplastic resin dispersion to provide an aqueous fluid blend and preparing said crack-free, relatively thick, coatings or films by dipping, spraying or casting said aqueous fluid blend.

3. The method of claim 1 or 2, wherein the perfluoroplastic resin is polytetrafluoroethylene (PTFE) or fluorinated ethylene propylene (FEP).

4. The method according to one of claims 1, 2 or 3 wherein the perfluoroelastomer latex is a copolymer of tetrafluoroethylene (TFE) with perfluoromethylvinyl ether (PMVE).

5. The method according to anyone of claims 1 to 4 containing cross-linking accelerators.

6. The method according to anyone of claims 1 to 5 containing suitable additives.

7. The method according to anyone of claims 1 to 6, for the preparation of a film comprising a sequence of lamellae wherein one or more lamellae is made from said fluid composition comprising a perfluoroplastic resin aqueous dispersion and perfluoroelastomer latex blend.

8. The method according to claim 7, wherein at least one non-resinous component is interspersed with other resineous lamellae.

9. The method according to claim 8, wherein the non-resinous lamellae contains a metallic composition.

## Patentansprüche (Patentansprüche für folgende(n) Vertragsstaat(en): BE, CH, DE, FR, GB, IT, LI, LU, NL, SE)

1. Verwendung einer flüssigen Zusammensetzung, die eine wässerige flüssige Mischung von 10 bis 90 Masse-% eines Perfluorelastomer-Latex und 90 bis 10 Masse-% einer wässerigen Perfluorkunststoff-Harzdispersion als solche umfaßt, wobei eine Mischung von Polytetrafluorethylen (PTFE) mit einem Copolymer von Tetrafluorethylen (TFE) mit Hexafluorpropylen (HFP) ausgeschlossen ist, bei der Herstellung rißfreier, relativ dicker Beschichtungen oder Filme, die gestützt oder nicht gestützt werden, insbesondere durch Eintauchen, Gießen oder Spritzen.

2. Verwendung einer flüssigen Zusammensetzung, die eine wässerige flüssige Mischung von 10 bis 90 Masse-% eines Perfluorelastomer-Latex umfaßt, der ein Copolymer von Tetrafluorethylen (TFE) mit einem Perfluor- (Alkylvinylether-) Comonomer und 90 bis 10 Masse-% einer wässerigen Perfluorkunststoff-Harzdispersion als solche umfaßt, bei der Herstellung rißfreier, relativ dicker Beschichtungen oder Filme, die gestützt oder nicht gestützt werden, insbesondere durch Eintauchen, Gießen oder Spritzen.

3. Verwendung nach Anspruch 1 oder 2, wobei das Perfluorkunststoff-Harz Polytetrafluorethylen (PTFE) oder ein fluoriertes Ethylenpropylen (FEP) ist.

4. Verwendung nach einem der Ansprüche 1 bis 3, wobei der Perfluorelastomer-Latex ein Copolymer von Tetrafluorethylen (TFE) und Perfluormethylvinylether (PMVE) ist.

5. Verwendung nach einem der Ansprüche 1 bis 4, welche Vernetzungsbeschleuniger enthält.

6. Verwendung nach einem der Ansprüche 1 bis 5, welche geeignete Additive enthält.

7. Verwendung nach einem der Ansprüche 1 bis 6 bei der Herstellung eines Films, der eine Sequenz von Lamellen umfaßt, wobei eine oder mehrere Lamellen aus der flüssigen Zusammensetzung, die eine wässerige Perfluorkunststoff-Harzdisperion und Perfluorelastomer-Latexmischung umfaßt, besteht bzw. bestehen.

8. Verwendung nach Anspruch 7, wobei zumindest eine nicht-harzartige Komponente mit anderen harzartigen Lamellen verschachtelt ist.

9. Verwendung nach Anspruch 8, wobei die nicht-harzartigen Lamellen eine metallische Zusammensetzung enthalten.

## Patentansprüche (Patentansprüche für folgende(n) Vertragsstaat(en): AT)

1. Verfahren zur Herstellung rißfreier, relativ dicker Beschichtungen oder Filme, die gestützt oder nicht gestützt werden, welches umfaßt: Mischen von 10 bis 90 Masse-% eines Perfluorelastomer-Latex in 90 bis 10 Masse-% einer wässerigen Perfluorkunststoff-Harzdispersion, wobei eine Mischung von Polytetrafluorethylen (PTFE) mit einem Copolymer von Tetrafluorethylen (TFE) mit Hexafluorpropylen (HFP) ausgeschlossen ist, um eine wässerige flüssige Mischung vorzusehen, und Herstellen der rißfreien, relativ dicken Beschichtungen oder Filme durch Eintauchen, Spritzen oder Gießen der wässerigen flüssigen Mischung.

2. Verfahren zur Herstellung rißfreier, relativ dicker Beschichtungen oder Filme, die gestützt oder nicht gestützt werden, welches umfaßt: Mischen von 10 bis 90 Masse-% eines Perfluorelastomer-Latex, der ein Copolymer von Tetrafluorethylen (TFE) mit einem Perfluor- (Alkylvinylether-) Comonomer in 90 bis 10 Masse-% einer wässerigen Perfluorkunststoff-Harzdispersion umfaßt, um eine wässerige flüssige Mischung vorzusehen, und Herstellen der rißfreien, relativ dicken Beschichtungen oder Filme durch Eintauchen, Spritzen oder Gießen der wässerigen flüssigen Mischung.

3. Verfahren nach Anspruch 1 oder 2, bei welchem das Perfluorkunststoff-Harz Polytetrafluorethylen (PTFE) oder fluoriertes Ethylenpropylen (FEP) ist.

4. Verfahren nach einem der Ansprüche 1, 2 oder 3, bei welchem der Perfluorelastomer-Latex ein Copolymer von Tetrafluorethylen (TFE) mit Perfluormethylvinylether (PMVE) ist.

5. Verfahren nach einem der Ansprüche 1 bis 4, welches Vernetzungsbeschleuniger enthält.

6. Verfahren nach einem der Ansprüche 1 bis 5, welches geeignete Additive enthält.

7. Verfahren nach einem der Ansprüche 1 bis 6 bei der Herstellung eines Films, der eine Sequenz von Lamellen umfaßt, wobei eine oder mehrere Lamellen aus der flüssigen Zusammensetzung, die eine wässerige Perfluorkunststoff-Harzdisperion und Perfluorelastomer-Latexmischung umfaßt, besteht bzw. bestehen.

8. Verfahren nach Anspruch 7, bei welchem zumindest eine nicht-harzartige Komponente mit anderen harzartigen Lamellen verschachtelt wird.

9. Verfahren nach Anspruch 8, bei welchem die nicht-harzartigen Lamellen eine metallische Zusammensetzung enthalten.

## Revendications (Revendications pour l'(les) Etat(s) contractant(s) suivant(s): BE, CH, DE, FR, GB, IT, LI, LU, NL, SE)

1. Utilisation d'une composition liquide comprenant un mélange liquide aqueux de 10 à 90 % en poids d'un latex d'élastomère perfluoré et de 90 à 10 % en poids d'une dispersion aqueuse de résine de matière plastique perfluorée telle quelle, à l'exclusion d'un mélange de polytétrafluoroéthylène (PTFE) et d'un copolymère de tétrafluoroéthylène (TFE) et d'hexafluoropropylène (HFP), pour la production de revêtements ou films relativement épais et sans craquelure, ayant un support ou non, notamment par immersion, coulée ou pulvérisation.

2. Utilisation d'une composition liquide comprenant un mélange liquide aqueux de 10 à 90 % en poids d'un latex d'élastomère perfluoré comprenant un copolymère de tétrafluoroéthylène (TFE) et d'un comonomère de perfluoro(alkylvinyléther) et de 90 à 10 % en poids d'une dispersion aqueuse de résine de matière plastique perfluorée telle quelle pour la production de revêtements ou films relativement épais et sans craquelure, ayant un support ou non, notamment par immersion, coulée ou pulvérisation.

3. Utilisation selon la revendication 1 ou 2, dans laquelle la résine de matière plastique perfluorée est le polytétrafluoroéthylène (PTFE) ou de l'éthylène-propylène fluoré (FEP).

4. Utilisation selon l'une des revendications 1 à 3, dans laquelle le latex d'élastomère perfluoré est un copolymère de tétrafluoroéthylène (TFE) et de perfluoro(méthylvinyléther) (PMVE).

5. Utilisation selon l'une quelconque des revendications 1 à 4, contenant des accélérateurs de réticulation.

6. Utilisation selon l'une quelconque des revendications 1 à 5, contenant des additifs adaptés.

7. Utilisation selon l'une quelconque des revendications 1 à 6 pour la préparation d'un film comprenant une série de lamelles dans laquelle une ou plusieurs lamelles est ou sont préparée(s) à partir de ladite composition liquide comprenant un mélange d'une dispersion aqueuse de résine de matière plastique perfluorée et d'un latex d'élastomère perfluoré.

8. Utilisation selon la revendication 7, dans laquelle au moins un composant non résineux est incorporé entre d'autres lamelles résineuses.

9. Utilisation selon la revendication 8, dans laquelle les lamelles non résineuses contiennent une composition métallique.

## Revendications (Revendications pour l'(les) Etat(s) contractant(s) suivant(s): AT)

1. Procédé de préparation de revêtements ou films relativement épais et sans craquelure, ayant un support ou non, comprenant le mélange de 10 à 90 % en masse d'un latex d'élastomère perfluoré dans 90 à 10 % en poids d'une dispersion aqueuse de résine de matière plastique perfluorée, à l'exclusion d'un mélange de polytétraperfluoroéthylène (PTFE) et d'un copolymère de tétrafluoroéthylène (TFE) et d'hexafluoropropylène (HFP), pour fournir un mélange liquide aqueux et la préparation desdits revêtements ou films relativement épais et sans craquelure par immersion, pulvérisation ou coulée dudit mélange liquide aqueux.

2. Procédé de préparation de revêtements ou films relativement épais et sans craquelure, ayant un support ou non, comprenant le mélange de 10 à 90 % en poids d'un latex d'élastomère perfluoré comprenant un copolymère de tétrafluoroéthylène (TFE) et d'un comonomère de perfluoro(alkylvinyléther) dans 90 à 10 % en poids d'une dispersion aqueuse de résine de matière plastique perfluorée pour fournir un mélange liquide aqueux et la préparation desdits revêtements ou films relativement épais et sans craquelure par immersion, pulvérisation ou coulée dudit mélange liquide aqueux.

3. Procédé selon la revendication 1 ou 2, dans lequel la résine de matière plastique perfluorée est le polytétrafluoroéthylène (PTFE) ou de l'éthylène-propylène fluoré (FPE).

4. Procédé selon l'une des revendications 1, 2 ou 3, dans lequel le latex d'élastomère perfluoré est un copolymère de tétrafluoroéthylène (TFE) et de perfluoro(méthylvinyléther) (PMVE).

5. Procédé selon l'une quelconque des revendications 1 à 4, contenant des accélérateurs de réticulation.

6. Procédé selon l'une quelconque des revendications 1 à 5, contenant des additifs adaptés.

7. Procédé selon l'une quelconque des revendications 1 à 6 pour la préparation d'un film comprenant une série de lamelles dans laquelle une ou plusieurs lamelles est ou sont préparée(s) à partir de ladite composition liquide comprenant un mélange d'une dispersion aqueuse de résine de matière plastique perfluorée et d'un latex d'élastomère perfluoré.

8. Procédé selon la revendication 7, dans lequel au moins un composant non résineux est incorporé entre d'autres lamelles résineuses.

9. Procédé selon la revendication 8, dans lequel les lamelles non résineuses contiennent une composition métallique.
